# EUROPEAN PATENT APPLICATION

(11) **EP 4 378 968 A1**
(43) Date of publication of application: **05.06.2024**
(21) Application number: 22849428.2
(22) Date of filing: 25.07.2022
(51) Int. Cl.: C08F 22/00, C08F 283/01, C08F 299/04, C11D 3/37

(54) **ESTER BOND-CONTAINING POLYCARBOXYLIC ACID (SALT) AND METHOD FOR PRODUCING SAME**

(30) Priority: 27.07.2021 JP 2021122126; 22.03.2022 JP 2022044810
(71) Applicant: Nippon Shokubai Co., Ltd., Osaka-shi, Osaka 541-0043 (JP)
(72) Inventor: YAMAGUCHI, Shigeru, Suita-shi, Osaka 564-0034 (JP); TOMIKE, Yoshikazu, Suita-shi, Osaka 564-0034 (JP); ITO, Ryota, Suita-shi, Osaka 564-0034 (JP)
(74) Representative: Cabinet Beau de Loménie
(86) International application number: PCT/JP2022/028620
(87) International publication number: WO 2023/008367

(57) **Abstract**

The present invention aims to provide an ester bond-containing polycarboxylic acid (salt) having a higher biodegradability and a higher alkaline degradation change rate, a method for producing the same, and a detergent composition containing the ester bond-containing polycarboxylic acid (salt). The present invention relates to an ester bond-containing polycarboxylic acid or a salt thereof, containing: an ester group-derived structural unit in a main chain; and a carboxylic acid or a salt thereof in a side chain, the carboxylic acid or the salt thereof being attached to a β position or a γ position of a carbonyl carbon of the ester group.

## Description

### TECHNICAL FIELD

The present disclosure relates to an ester bond-containing polycarboxylic acid (salt) having excellent biodegradability and alkaline degradability, a method for producing the same, and a detergent composition containing the compound.

### BACKGROUND ART

Conventionally, polyacrylic acid and copolymers of acrylic acid and maleic acid have been used as inexpensive but high-performance detergent builders. In recent years, polymers for use as detergent builders have been required to be water-soluble polymers with low environmental impact, and to have builder action and biodegradability.

For example, Patent Literature 1 discloses a vinyl acetate/acrylic acid/maleic anhydride copolymer.

Patent Literature 2 discloses a copolymer of 2-methylene-1,3-dioxepane and acrylic acid.

### CITATION LIST

### - Patent Literature

Patent Literature 1: JP H04-311706 A
Patent Literature 2: JP 2000-38595 A

### SUMMARY OF INVENTION

### - Technical Problem

The inventors of the present application have found through previous studies that a detergent composition containing a homopolymer of acrylic acid or a copolymer of acrylic acid and other comonomers such as maleic acid has an excellent anti-redeposition ability.

However, the copolymers disclosed in Patent Literature 1 and Patent Literature 2 have insufficient biodegradability, and still have room for improvement in anti-redeposition ability.

The present disclosure has been made in response to such problems, and aims to provide an ester bond-containing polycarboxylic acid (salt) containing an ester group-derived structural unit in a main chain and a carboxy group in a side chain, with the carboxylic acid (salt) being attached to the β position or the γ position of the carbonyl carbon of the ester group. Also provided are a production method thereof and a detergent composition containing the ester bond-containing polycarboxylic acid (salt) .

### - Solution to Problem

As a result of further investigation, the inventors of the present application found that an ester bond-containing polycarboxylic acid (salt) containing an ester group-derived structural unit in a main chain and a carboxy group in a side chain, with the carboxylic acid (salt) being attached to the β position or the γ position of the carbonyl carbon of the ester group, has a higher biodegradability and a higher alkaline degradation change rate when used as a detergent composition. Thereby, the present invention has been completed.

Specifically, the present invention relates to an ester bond-containing polycarboxylic acid or a salt thereof, containing:
an ester group-derived structural unit in a main chain; and
a carboxylic acid or a salt thereof in a side chain,
the carboxylic acid or the salt thereof being attached to a β position or a γ position of a carbonyl carbon of the ester group.

Preferably, the ester bond-containing polycarboxylic acid or the salt thereof has an alkaline degradation change rate of 10% or higher.

Preferably, the ester bond-containing polycarboxylic acid or the salt thereof has a biodegradability of 20% or higher.

The present invention also relates to a detergent composition containing
the ester bond-containing polycarboxylic acid or the salt thereof of the present invention.

The present invention also relates to a method for producing an ester bond-containing polycarboxylic acid or a salt thereof, the method including:
reacting a compound having an unsaturated double bond and an acid anhydride group with a compound having two or more hydroxy groups to obtain a product; and
reacting double bonds of the product.

The present invention also relates to a method for producing an ester bond-containing polycarboxylic acid or a salt thereof, the method including
reacting a compound having three or more selected from the group consisting of a carboxylic acid and salts thereof or an anhydride of the compound with a compound having two or more hydroxy groups.

### - Advantageous Effects of Invention

The present disclosure can provide an ester bond-containing polycarboxylic acid (salt) having a higher biodegradability and a higher alkaline degradation change rate, a method for producing the same, and a detergent composition containing the ester bond-containing polycarboxylic acid (salt).

### BRIEF DESCRIPTION OF DRAWINGS

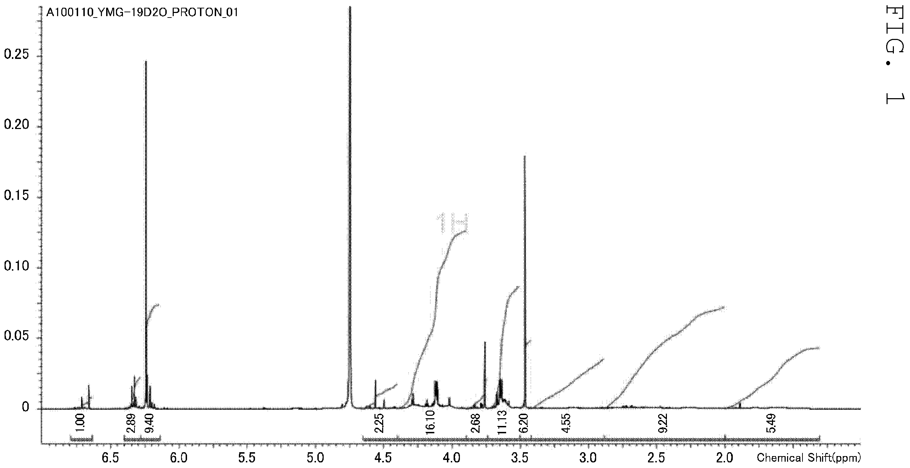

FIG. 1 is a proton NMR chart of an ester bond-containing polycarboxylic acid (4) obtained in Example 4. The peak at 3.6 to 4.3 ppm is considered to be the peak of hydrogen bonded to the carbon adjacent to the ester bond.

### DESCRIPTION OF EMBODIMENTS

Embodiments of the present disclosure will be described in detail below. The preferred embodiments described below are merely exemplary in nature and are not intended to limit the present disclosure, its applications, or its uses.

In the following description, unless otherwise specified, the term "%" refers to "% by mass", the term "parts" refers to "parts by mass," and the phrase "A to B" indicating a range refers to "A or more and B or less". In the present disclosure, "(meth)acrylate" refers to "acrylate" or "methacrylate", and "(meth)acrylic" refers "acrylic" or "methacrylic".

### (Ester bond-containing polycarboxylic acid (salt))

An ester bond-containing polycarboxylic acid (salt) according to an embodiment of the present disclosure has the following substituents and structural units (1) to (3):
(1) an ester group-derived structural unit in the main chain; and
(2) a carboxylic acid (salt) in a side chain,
(3) the carboxylic acid (salt) being attached to the β position or the γ position of the carbonyl carbon of the ester group in the main chain.

The ester groups present in the main chain can be generally represented by the chemical formula "-C=O-O-" or "-COO-". When a detergent composition or the like contains an ester bond-containing polycarboxylic acid (salt) having two or more these bonds in the main chain, the detergent composition can contribute to reduction of environmental impact after discharged into a river, etc., by the hydrolysis of the detergent composition at the ester bonds in the main chain or by the biodegradation of low-molecular weight compounds generated by the hydrolysis the detergent composition.

Here, the ester group-derived structural unit in (1) refers to a structure represented by "-C=O-O-" or "-COO-".

The ester bond-containing polycarboxylic acid (salt) of the present disclosure has two or more carboxylic acids (salts) in side chains and thus has a polycarboxylic acid (salt) structure.

The carboxylic acids (salts) each may also be represented by "-COOM". M is a hydrogen atom, an alkali metal atom, or an ammonium group, more preferably a hydrogen atom, sodium, or potassium, still more preferably a hydrogen atom or sodium.

In an exemplary structure of the ester bond-containing polycarboxylic acid (salt) of the present disclosure, a structure including the ester bond in the main chain and a carboxylic acid (salt) moiety located at the β or γ position of the carbonyl carbon of the ester group in the main chain can be represented by the following formula (1): 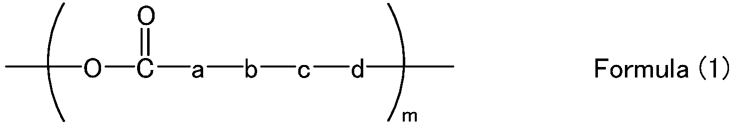 wherein a, b, c, and d are substituents containing carbon atoms of α, β, γ, and δ positions, respectively, of the carbonyl carbon of the ester group; a is selected from a methylene group (-CH₂-), a -CHOH- group, and a methine group (>CH-); b is selected from a methylene group (-CH₂-), a methine group (>CH-), and a -CR₁COOH(M)- group; c is selected from a single bond, a methylene group (-CH₂-), and a -CR₁COOH(M)- group; d is a single bond or a -CR₁COOH(M)-group; each R₁ is the same or different and represents a hydrogen atom or a methyl group, and M represents a hydrogen atom, an alkali metal atom, or an ammonium group; and m is a positive integer of 1 or more.

When the ester bond-containing polycarboxylic acid (salt) of the present disclosure is produced by copolymerizing acrylic acid and a dicarboxylic acid compound such as maleic acid (anhydride), a carboxylic acid (salt) is attached to each of the β position and the δ position in the formula (1). When polymerizing one or more types of dicarboxylic acid (anhydride) compounds having double bonds such as maleic acid or itaconic acid (anhydride), a carboxylic acid (salt) is attached to the γ position.

A structural unit derived from the ether bond constituting the ester bond can be represented by the following formula (2): 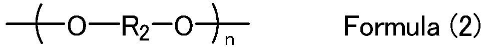 wherein R₂ represents a C2-C10 substituent having two bonds, and n represents a positive integer of 1 or more.

Specific examples of R₂ in the formula (2) include branched or linear chain substituents containing two bonds such as -CH₂CH₂-, -CH₂CH₂CH₂-, -CH₂CH₂CH₂CH₂-, - CH₂CH₂CH₂CH₂CH₂-, -CH₂CH₂CH₂CH₂CH₂CH₂-, -CHCH₃CH₂-, - CHCH₃CH₂CH₂-, -CH₂CHCH₃CH₂-, and -CH₂CH₂NHCH₂CH₂-; chain substituents containing an ether bond and containing two bonds such as -CH₂CH₂OCH₂CH₂-, -CH₂CH₂OCH₂CH₂OCH₂CH₂-, and - CH₂CH₂OCH₂CH₂OCH₂CH₂OCH₂CH₂-; C3-C10 cyclic substituents containing two bonds; and chain substituents containing a hydroxy group and containing two bonds such as - CH₂CH(OH)CH₂-, -CH₂CH(OH)CH₂CH₂-, -CH₂CH₂CH(OH)CH₂CH₂-, and - CH₂CH(OH)CH₂CH₂CH₂CH₂-. From the viewpoint of biodegradability and alkaline degradation change rate, a - CH₂CH₂- group derived from ethylene glycol and a - CH₂CHOHCH₂- group derived from glycerol are preferred.

An example of the ester bond-containing polycarboxylic acid (salt) of the present invention is one having a structure represented by the following formula (3) as a repeating unit: 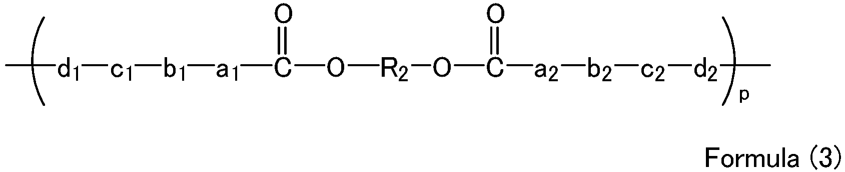 wherein a₁ and a₂ are the same as or different from each other, and are the same as the substituent a in the formula (1); b₁ and b₂ are the same as or different from each other and are the same as the substituent b in the formula (1); c₁ and c₂ are the same as or different from each other and are the same as the substituent c in the formula (1); d₁ and d₂ are the same as or different from each other and are the same as the substituent d in the formula (1); R₂ is the same as R₂ in the formula (2); and p is a positive integer of 1 or more.

A specific example of the structure of the ester bond-containing polycarboxylic acid (salt) of the present disclosure can be represented by the following formula (4): 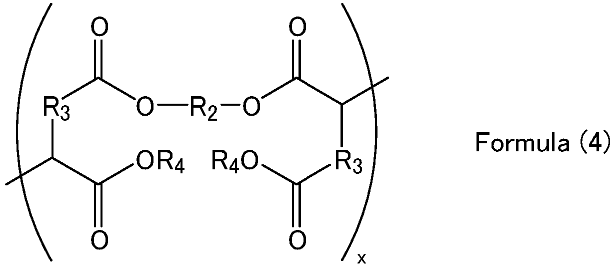 wherein R₂s are the same as or different from each other and are the same as R₂ in the formula (2); R₃ are the same as or different from each other and are selected from a methylene group and a -CHCH₃- group; R₄ represents a hydrogen atom, an alkali metal atom, an ammonium group, or an organic group, and at least one of the two R₄s is a hydrogen atom, an alkali metal atom, or an ammonium group; and x is a positive integer of 1 or more.

Examples of the organic group for R₄ in the formula (4) include monovalent organic groups obtained by removing one hydroxy group from a hydroxy group-containing compound. Examples of the hydroxy group-containing compound include compounds having two or more hydroxy groups in the present disclosure described below.

An ester bond-containing polycarboxylic acid (salt) having a structure represented by the following formula (4-1), which is a structure represented by the formula (4) in which both two R₄s are hydrogen atoms, can be obtained by reacting maleic anhydride with ethylene glycol and then polymerizing the double bonds derived from maleic anhydride by a reaction such as a radical reaction, for example.

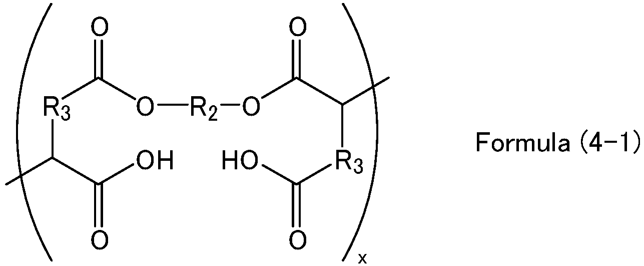

In the formula (4-1), R₂, R₃, and x are the same as those in the formula (4).

A specific example of another structure of the polymer of the ester bond-containing polycarboxylic acid (salt) of the present disclosure can be represented by the following formula (5): 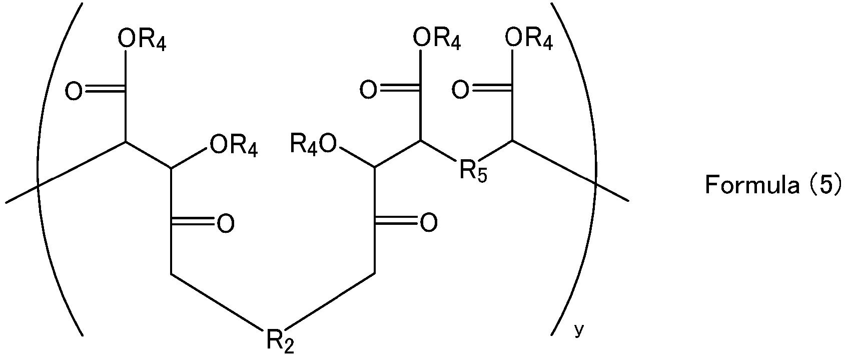 wherein R₂ is the same as R₂ in the formula (2); R₄s are the same as those in the formula (4), and at least one of the five R₄s is a hydrogen atom, an alkali metal atom, or an ammonium group; R₅ is a methylene group; and y is a positive integer of 1 or more.

An ester bond-containing polycarboxylic acid (salt) having a structure represented by the following formula (5-1), which is a structure represented by the formula (5) in which all the R₄s are hydrogen atoms, can be obtained by reacting maleic anhydride with ethylene glycol and then polymerizing acrylic acid and the double bonds derived from maleic anhydride by a reaction such as a radical reaction, for example.

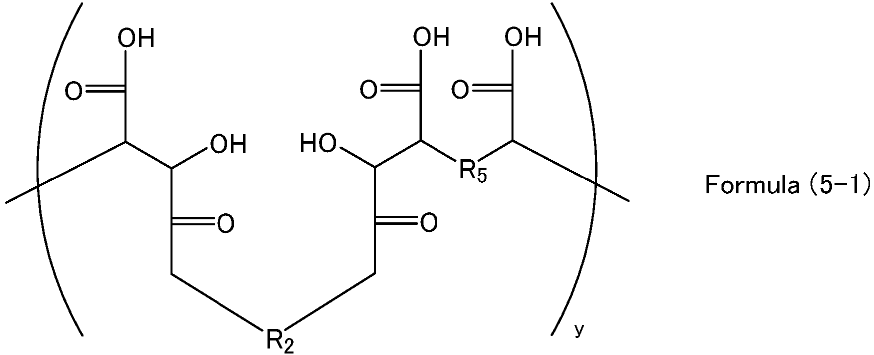

R₂, R₅, and y in the formula (5-1) are the same as those in the formula (5).

A specific example of yet another structure of the polymer of the ester bond-containing polycarboxylic acid (salt) of the present disclosure can be represented by the following formula (6): 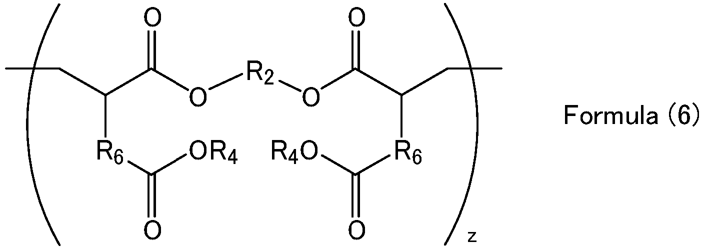 wherein R₂ is the same as R₂ in the formula (2); R₄s are the same as those in the formula (4), and at least one of the two R₄s is a hydrogen atom, an alkali metal atom, or an ammonium group; R₆ is a methylene group; and z is a positive integer of 1 or more.

An ester bond-containing polycarboxylic acid (salt) having a structure represented by the following formula (6-1), which is a structure represented by the formula (6) in which both two R₄s are hydrogen atoms, can be obtained by reacting itaconic anhydride with glycerol and then polymerizing the double bonds derived from itaconic anhydride by a reaction such as a radical reaction, for example. Since itaconic anhydride can provide a homopolymer, when the polymer of the ester bond-containing polycarboxylic acid (salt) of the present disclosure is synthesized using itaconic anhydride as a raw material, not only a linear polymer but also a branched polymer is produced.

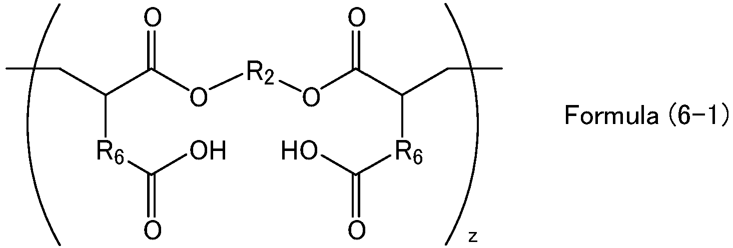

R₂, R₆, and z in the formula (6-1) are the same as those in the formula (6).

An example of yet another structure of the polymer of the ester bond-containing polycarboxylic acid (salt) of the present disclosure is, in addition to the structures represented by the formulas (4) to (6), a structure represented by the following formula (7): 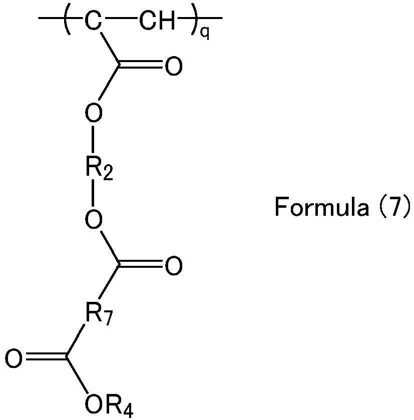 wherein R₂ is the same as that in the formula (2); R₄ is the same as that in the formula (4); R₇ is an organic group; and q is a positive integer of 1 or more.

Examples of the organic group for R₇ in the formula (7) include a C1-C4 divalent hydrocarbon group and a group obtained by replacing one or more hydrogen atoms of a C1-C4 divalent hydrocarbon group with a hydroxy group or a -COOR₄ group (where R₄ is the same as that in the formula (4)).

An ester bond-containing polycarboxylic acid (salt) having a structure represented by the formula (7) can be obtained by reacting maleic anhydride, ethylene glycol, and citric acid and then polymerizing the double bonds derived from maleic anhydride by a reaction such as a radical reaction, for example. In this case, the obtained ester bond-containing polycarboxylic acid (salt) has a structure represented by the formula (4-1) in addition to the structure represented by the formula (7).

A specific yet another example of the ester bond-containing polycarboxylic acid (salt) of the present disclosure is a polymer having a structure represented by the following formula (8) as a repeating unit.

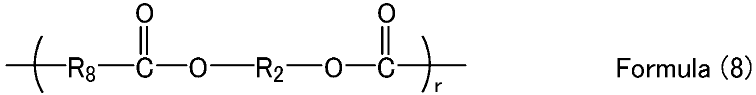

R₂ in the formula (8) is the same as that in the formula (2). R₈ represents an oligomer group obtained by removing two or more carboxylic acid (salt) groups from an oligomer of a compound having an unsaturated double bond and a carboxylic acid (salt) group. The carboxylic acid (salt) is attached to the β position or the γ position of the carbonyl carbon attached to R₈. The symbol r is a positive integer of 1 or more.

The oligomer group for R₈ may be an oligomer group from which three or more carboxylic acid (salt) groups are removed. In such a case, other oligomer groups are attached to the sites where the carboxylic acid (salt) groups are removed via linking groups represented by -COO-R₂-OCO-. When the oligomer group for R₈ is a divalent oligomer group from which only two carboxylic acid (salt) groups are removed, only two other oligomer groups are attached to the sites where the carboxylic acid (salt) groups are removed via -COO-R₂-OCO- groups.

When the oligomer group for R₈ is an n-valent group from which n (n is an integer of 3 or more) carboxylic acid (salt) groups are removed, to n sites where the carboxylic acid (salt) groups are removed are attached other n oligomer groups each via a -COO-R₂-OCO- group.

The ester bond-containing polycarboxylic acid (salt) having a structure represented by the formula (8) can be obtained by reacting a compound having two or more hydroxy groups with an oligomer of a compound having an unsaturated double bond and a carboxylic acid (salt) group as a compound having three or more carboxylic acids (salts).

The compound having an unsaturated double bond and a carboxylic acid (salt) group and the compound having two or more hydroxy groups may be those described below.

### (Physical properties of ester bond-containing polycarboxylic acid (salt))

The ester bond-containing polycarboxylic acid (salt) of the present disclosure is a water-soluble polymer. The term "water-soluble" means that 1 part by mass or more of the ester bond-containing polycarboxylic acid (salt) of the present disclosure is soluble in 100 parts by mass of pure water at room temperature and atmospheric pressure. Since the ester bond-containing polycarboxylic acid (salt) of the present disclosure exhibits water solubility, it can be used as detergent builders, detergents, water treatment agents, dispersants, fiber treatment agents, scale inhibitors (scale suppressors), additives for cement, metal-ion chelating agents, thickeners, various binders, and the like.

When having a weight average molecular weight as low as the molecular weight of an oligomer, the ester bond-containing polycarboxylic acid (salt) of the present disclosure has a higher biodegradability and a higher alkaline degradation change rate. When used as a detergent builder for detergent compositions, the ester bond-containing polycarboxylic acid (salt) preferably has a weight average molecular weight of 600 or more.

The lower limit of the weight average molecular weight of the ester bond-containing polycarboxylic acid (salt) of the present disclosure is not limited. In order to enhance Ca ion-chelating ability, the weight average molecular weight is preferably 1,000 or more, more preferably 1500 or more, still more preferably 3,000 or more. The upper limit of the weight average molecular weight of the ester bond-containing polycarboxylic acid (salt) of the present disclosure is not limited. The weight average molecular weight may be 1,000,000 or less, or may be 200,000 or less. In order to enhance biodegradability, the molecular weight is preferably 80,000 or less, more preferably 10,000 or less, still more preferably 3,000 or less.

The range of the weight average molecular weight of the ester bond-containing polycarboxylic acid (salt) of the present disclosure is preferably 1,000 to 1,000,000, more preferably 1,500 to 200,000, still more preferably 1,500 to 80,000, particularly preferably 3,000 to 10,000.

In the present disclosure, the weight-average molecular weight is a value measured by gel permeation chromatography (GPC), and can be measured using the apparatus and under the measurement conditions described in the Examples below.

The ester bond-containing polycarboxylic acid (salt) of the present disclosure preferably has an acid value of 50 mg (KOH)/kg or more. The acid value is more preferably 100 mg (KOH)/kg or more, still more preferably 300 mg (KOH)/kg or more.

When added to a detergent, the ester bond-containing polycarboxylic acid (salt) preferably has an acid value falling within the above-described range to chelate calcium in tap water and enhance the detergency of the detergent.

The ester bond-containing polycarboxylic acid (salt) of the present disclosure preferably has a hydroxy value of 5 mg (KOH)/kg or more. The hydroxy value is more preferably 10 mg (KOH)/kg or more, still more preferably 50 mg (KOH)/kg or more. The ester bond-containing polycarboxylic acid (salt) preferably has a hydroxyl value falling within the above range to enhance dispersibility in hard water and compatibility with surfactants.

The biodegradability of the ester bond-containing polycarboxylic acid (salt) of the present disclosure can be measured by the biodegradability test described below. The biodegradability of the ester bond-containing polycarboxylic acid (salt) of the present disclosure is preferably higher. When a detergent composition containing such an ester bond-containing polycarboxylic acid (salt) is used, the environmental impact of contaminated water after washing is reduced. The biodegradability is preferably 10% or higher, more preferably 20% or higher, still more preferably 50% or higher, most preferably 60% or higher.

The alkaline degradation change rate of the ester bond-containing polycarboxylic acid (salt) of the present disclosure can be measured by the alkaline degradation change rate test described below. The alkaline degradation change rate of the ester bond-containing polycarboxylic acid (salt) of the present disclosure is preferably higher. Such an ester bond-containing polycarboxylic acid (salt) is removed by alkaline washing at an increased efficiency. The alkaline degradation change rate is preferably 5% or higher, more preferably 10% or higher, still more preferably 20% or higher.

The Ca-chelating ability of the ester bond-containing polycarboxylic acid (salt) of the present disclosure can be measured by the Ca-chelating ability test described below. A detergent containing an ester bond-containing polycarboxylic acid (salt) with an increased Ca-chelating ability can prevent the deactivation and insolubilization of surfactants due to the Ca ions, significantly improve the detergency, or significantly reduce the amount of surfactants used.

### (Ester bond-containing polycarboxylic acid (salt) composition)

An ester group-containing polycarboxylic acid (salt) composition of the present disclosure contains the ester group-containing polycarboxylic acid (salt) of the present disclosure. The ester group-containing polycarboxylic acid (salt) composition of the present disclosure may contain components other than the ester group-containing polycarboxylic acid (salt) of the present disclosure.

The ester group-containing polycarboxylic acid (salt) composition of the present disclosure is not limited, and preferably contains 0.1% by mass or more and 100% by mass or less of the ester group-containing polycarboxylic acid (salt) of the present disclosure based on 100 parts by mass of the ester group-containing polycarboxylic acid (salt) composition of the present disclosure. The amount is more preferably 1% by mass or more and 99.5% by mass or less.

The ester group-containing polycarboxylic acid (salt) composition of the present disclosure may contain an esterified product of an unsaturated dicarboxylic acid and a compound containing two or more hydroxy groups (hereinafter also referred to as "ester bond-containing carboxylic acid (salt)"). The amount of the ester bond-containing carboxylic acid (salt) in the ester group-containing polycarboxylic acid (salt) composition of the present disclosure is preferably 20% by mass or less, more preferably 10% by mass or less, based on the total of 100% by mass of the ester group-containing polycarboxylic acid (salt) and the ester bond-containing carboxylic acid (salt) in the ester group-containing polycarboxylic acid (salt) composition of the present disclosure. When the amount of the ester bond-containing carboxylic acid (salt) falls within the above-described range, the ester group-containing polycarboxylic acid (salt) composition of the present disclosure tends to have an improved anti-redeposition ability.

The "ester bond-containing carboxylic acid (salt)" refers to an esterified product of an unsaturated dicarboxylic acid and a compound containing two or more hydroxy groups, with the esterified product being not subjected to a polymerization reaction.

### (Method for producing ester bond-containing polycarboxylic acid (salt))

A method for producing an ester bond-containing polycarboxylic acid (salt) of the present disclosure is not limited. Preferred examples of the production method include a method (I) including a step (A) of reacting a compound having an unsaturated double bond and an acid anhydride group with a compound having two or more hydroxy groups to obtain a product and a step (B) of reacting the double bonds of the product; and a method (II) including a step (C) of reacting a compound having three or more carboxylic acids (salts) or an anhydride of the compound with a compound having two or more hydroxy groups.

More preferably, the production method is a method in which the reaction in the step (A) or the step (C) includes an esterification reaction. More preferred examples of the production method include: a method including (1) esterification by reacting a compound having an unsaturated double bond and an acid anhydride group with a compound having two or more hydroxy groups to obtain a product and then (2) reacting the double bonds of the product obtained by the esterification; and a method including esterification by reacting a compound having three or more carboxylic acids (salts) or an anhydride of the compound with a compound having two or more hydroxy groups.

The step (A) may be reacting only a compound having an unsaturated double bond and an acid anhydride group with a compound having two or more hydroxy groups. Alternatively, compounds other than these may be further used. Examples of compounds other than these include compounds having three or more carboxylic acids (salts) as described below.

The compound having an unsaturated double bond and an acid anhydride group in the present disclosure is not limited as long as it has a double bond and an acid anhydride group. Examples includes maleic anhydride, citraconic anhydride, itaconic anhydride, phthalic anhydride, and trimellitic anhydride. Preferred of these is one or more selected from maleic anhydride and itaconic anhydride because they have high reactivity with a compound having two or more hydroxy groups in the esterification.

The compound having three or more carboxylic acids (salts) in the present disclosure is not limited as long as it has three or more carboxylic acid (salt) groups. Examples include oligomers of one or more compounds selected from compounds having an unsaturated double bond (more preferably a radically polymerizable unsaturated double bond) and a carboxylic acid (salt) group, such as acrylic acid, maleic acid, fumaric acid, citraconic acid, itaconic acid, methylene glutaric acid, and methylene malonic acid; oligomers of one or more compounds selected from compounds having an anionically polymerizable carboxylic acid (salt) group, such as glyoxylic acid and methylene malonic acid; and citric acid, 1,3,5-pentanetetracarboxylic acid, 1,2,3,4-butanetetracarboxylic acid, 1,2,3,4,5,6-cyclohexanehexacarboxylic acid, trimellitic acid, and pyrometic acid and salts thereof. Preferred of these are oligomers of one or more compounds selected from 1,2,3,4-butanetetracarboxylic acid, maleic acid, itaconic acid, salts thereof, and anhydrides thereof because they have high reactivity with a compound having two or more hydroxy groups in the esterification.

The oligomers only need to be those finally containing a carboxylic acid (salt) group. The oligomers may also include, for example, oligomers obtained by preparing an oligomer using an ester compound corresponding to a compound having a carboxylic acid (salt) group as a raw material and hydrolyzing the oligomer with a base, or converting into acid-type carboxy groups with optionally adding a strong acid.

The anhydride of a compound having three or more carboxylic acids (salts) in the present disclosure is not limited as long as a hydrolysis product of the compound has three or more carboxylic acid (salt) groups. Examples of the anhydride include 1,3,5-pentanetetracarboxylic anhydride, 1,2,3,4-butanetetracarboxylic dianhydride, 1,2,3,4,5,6-cyclohexanehexacarboxylic trianhydride, trimellitic anhydride, and pyromellitic dianhydride. Preferred of these is 1,2,3,4-butanetetracarboxylic dianhydride because it has high reactivity with a compound having two or more hydroxy groups in the esterification.

The compound having three or more carboxylic acids (salts) in the present disclosure preferably has four or more carboxyl groups to increase the density of carboxylic acids in the ester group-containing polycarboxylic acid (salt) and to continue to have a high calcium chelating ability and a high ability to disperse carbon black.

The compound having two or more hydroxy groups in the present disclosure is not limited as long as it is a compound having two or more hydroxy groups. It may have three or four hydroxy groups. Specific examples include branched or linear chain compounds such as ethylene glycol, propane-1,3-diol, butane-1,4-diol, heptane-1,5-diol, hexane-1,6-diol, propylene glycol, 1,3-butanediol, 1,4-pentanediol, and diethanolamine; ether bond-containing chain compounds such as diethylene glycol, triethylene glycol, and tetraethylene glycol; C3-C10 chain cyclic compounds such as cyclohexanediol; and chain compounds each having three or more hydroxy groups, such as glycerol, 1,2,4-butanetriol, pentane-1,3,5-triol, 1,2,6-hexanetriol, and HO-CH₂CH₂CH (OH) CH₂CH₂CH₂-OH. From the viewpoint of biodegradability and alkaline degradation change rate, one or more selected from ethylene glycol and glycerol are preferred.

### <Esterification conditions>

When the esterification reaction between the compound having an unsaturated double bond and an acid anhydride group and the compound having two or more hydroxy groups in the present disclosure is performed, the mixing ratio of these two compounds is not limited. The reaction may be performed at any ratio. In order to produce a polymer having a greater weight average molecular weight from the esterified product obtained by the esterification reaction, the esterification reaction is preferably performed in a state where the number of moles of the acid anhydride groups and the number of moles of the hydroxy groups in the two compounds are similar to each other.

When the esterification reaction is performed using a different compound having a carboxylic acid (salt) other than and in addition to the compound having an unsaturated double bond and an acid anhydride group, the esterification reaction is preferably performed in a state where a sum of the number of moles of acid anhydride groups of the compound having an unsaturated double bond and an acid anhydride group and the number of moles of carboxyl groups of the different compound having a carboxylic acid (salt) is similar to the number of moles of hydroxy groups.

In the step (A), the ratio of the compound having two or more hydroxy groups to the compound having an unsaturated double bond and an acid anhydride group is not limited. In the case of the compound having two hydroxy groups, the number of moles of hydroxy groups therein is preferably 0.5 mol or more and 2.0 mol or less, more preferably 0.7 mol or more and 1.5 mol or less, per mole of the compound having an unsaturated double bond and an acid anhydride group.

In the case of the compound having three hydroxy groups, the number of moles of hydroxy groups therein is preferably 0.8 mol or more and 3 mol or less, more preferably 1.0 mol or more and 2.2 mol or less.

In the case of the compound having four or more hydroxy groups, the number of moles of hydroxy groups therein is preferably 1.0 mol or more and 4.0 mol or less, more preferably 1.4 mol or more and 3.0 mol or less.

In these cases, the biodegradability and alkaline degradation change rate of the ester bond-containing polycarboxylic acid (salt) tend to improve.

When the esterification reaction is performed using a different compound having a carboxylic acid (salt) other than and in addition to the compound having an unsaturated double bond and an acid anhydride group, the number of moles of hydroxy groups in a compound having two hydroxy groups is preferably 0.5 mol or more and 2.0 mol or less, more preferably 0.7 mol or more and 1.5 mol or less, relative to a sum, which is taken as 1 mol, of the number of moles of carboxylic acid (salt) the compound having an unsaturated double bond and an acid anhydride group and the number of moles of carboxy groups of the different compound having a carboxylic acid (salt). In the case of the compound having three hydroxy groups, the number of moles of hydroxy groups therein is preferably 0.8 mol or more and 3 mol or less, more preferably 1.0 mol or more and 2.2 mol or less. In the case of the compound having four or more hydroxy groups, the number of moles of hydroxy groups therein is preferably 1.0 mol or more and 4.0 mol or less, more preferably 1.4 mol or more and 3.0 mol or less.

When the esterification reaction is performed using a different compound having a carboxylic acid (salt) other than and in addition to the compound having an unsaturated double bond and an acid anhydride group, the different compound containing a carboxylic acid (salt) is preferably used such that the number of moles of carboxyl groups in the different compound containing a carboxylic acid (salt) is 0.1 to 7.0 mol per mole of the compound having an unsaturated double bond and an acid anhydride group. The number of moles of carboxyl groups in the different compound containing a carboxylic acid (salt) is more preferably 0.2 to 5.0 mol, still more preferably 0.3 to 3.0 mol, per mole of the compound having an unsaturated double bond and an acid anhydride group.

In the step (C), the ratio of the compound having two or more hydroxy groups to the compound having three or more carboxylic acids (salts) or an anhydride of the compound is not limited. In the case of the compound having two hydroxy groups, the number of moles of hydroxy groups therein is preferably 0.5 mol or more and 2.0 mol or less, more preferably 0.8 mol or more and 1.5 mol or less, per mole of the compound having three or more carboxylic acids (salts) or an anhydride of the compound. In the case of the compound having three hydroxy groups, the number of moles of hydroxy groups therein is preferably 0.8 mol or more and 3 mol or less, more preferably 1.0 mol or more and 2.2 mol or less. In the case of the compound having four or more hydroxy groups, the number of moles of hydroxy groups contained is preferably 1.0 mol or more and 4.0 mol or less, more preferably 1.4 mol or more and 3.0 mol or less.

In these cases, the biodegradability and alkaline degradation change rate of the ester bond-containing polycarboxylic acid (salt) tend to improve.

The reaction temperature in the step (A) or the step (C) is not limited, and is preferably 25°C or higher, more preferably 50°C or higher, still more preferably 75°C or higher. Further, the temperature is preferably 200°C or lower, more preferably 160°C or lower, still more preferably 150°C or lower.

The reaction temperature preferably falls within the range from 25°C to 200°C, more preferably from 50°C to 160°C, still more preferably from 75°C to 150°C.

These preferred reaction temperatures also apply to the esterification reaction in the step (A).

In these cases, the biodegradability and alkaline degradation change rate of the ester bond-containing polycarboxylic acid (salt) tend to improve.

When the reaction in the step (A) or the step (C) includes an esterification reaction, a known esterification catalyst or esterification enzyme may be used. Examples of the esterification catalyst include titanium-based esterification catalysts and tin-based esterification catalysts.

### <Polymerization conditions>

The product obtained by the esterification reaction of the compound having an unsaturated double bond and an acid anhydride group with the compound having two or more hydroxy groups in the present disclosure (hereinafter also referred to as an esterified product) is subsequently subjected to a polymerization reaction. In the polymerization reaction, a different polymerizable monomer may be used.

Specific preferred examples of the different polymerizable monomer include acrylic acid, methacrylic acid, maleic acid, itaconic acid, fumaric acid, citraconic acid, allyl alcohol, isoprenol, an allyl alcohol EO adduct, an isoprenol EO adduct, acrylamide, sodium acrylamide propane sulfonate, sodium 2-hydroxy-3-allyloxypropane sulfonate, hydroxyethyl acrylate, and hydroxyethyl methacrylate.

In the case where the esterified product of the present disclosure is reacted with the different polymerizable monomer, the ratio of the product obtained by the esterification reaction of the compound having an unsaturated double bond and an acid anhydride group with the compound having two or more hydroxy groups in the present disclosure to the different polymerizable monomer is not limited. These may be used in any ratio for polymerization. Increasing the proportion of the moles of the different polymerizable monomer tends to increase the weight average molecular weight of the ester bond-containing polycarboxylic acid (salt) of the present disclosure. On the other hand, increasing the proportion of the different polymerizable monomer tends to decrease the biodegradability.

The ratio between the esterified product of the present disclosure and the different polymerizable monomer is not limited. For example, the different polymerizable monomer may be used in an amount from 0.05 to 5.0 mol, 0.1 to 3.0 mol, or 0.2 to 2.0 mol, per mole of the esterified product of the present disclosure.

During the polymerization reaction, a hydroxy group-containing compound may be added. This allows the polymerization reaction and the esterification reaction between the carboxylic acids (salts) and the hydroxy groups in the resulting polymer to proceed. Examples of the hydroxy group-containing compound include the above-described compounds having two or more hydroxy groups.

In the case where the hydroxy group-containing compound is added during the polymerization reaction, the ratio of the hydroxy group-containing compound added is preferably 0.05 to 2.0 moles per mole of the esterified product of the present disclosure. The ratio of the compound is more preferably 0.08 to 1.5 mol, still more preferably 0.1 to 1.3 mol.

### <Polymerization initiator>

In the production method, a commonly used polymerization initiator may be used. Specific suitable examples include hydrogen peroxide; persulfates such as sodium persulfate, potassium persulfate, and ammonium persulfate; azo compounds such as 2,2'-azobis(2-amidinopropane) hydrochloride, 4,4'-azobis-4-cyanovaleric acid, azobisisobutyronitrile, and 2,2'-azobis(4-methoxy-2,4-dimethylvaleronitrile); and organic peroxides such as benzoyl peroxide, lauroyl peroxide, peracetic acid, di-t-butyl peroxide, and cumene hydroperoxide. Preferred among these polymerization initiators are hydrogen peroxide, persulfates, and 2,2'-azobis(2-amidinopropane) hydrochloride, and more preferred are persulfates and 2,2'-azobis(2-amidinopropane) hydrochloride. Each of these polymerization initiators may be used alone, or two or more of these may be used in combination.

In order to enhance polymerizabiliity and reduce residual initiators, the amount of the polymerization initiator is preferably 0.5% by weight or more and 60% by weight or less relative to the product obtained by an esterification reaction of the compound having an unsaturated double bond and an acid anhydride group with the compound having two or more hydroxy groups in the present disclosure. The amount is more preferably 1.0% by weight or more and 50% by weight or less, still more preferably 2.0% by weight or more and 30% by weight or less.

In the production method, an accelerator such as Mohr's salt may be used in combination with a polymerization initiator.

When Mohr's salt is used, in order to enhance polymerizability, the amount of Mohr's salt is preferably 0.002% by weight or more and 0.05% by weight or less relative to the product obtained by an esterification reaction of the compound having an unsaturated double bond and an acid anhydride group with the compound having two or more hydroxy groups in the present disclosure. The amount is more preferably 0.003% by weight or more and 0.04% by weight or less.

### <Polymerization conditions>

In the production method, the polymerization temperature may be appropriately set depending on factors such as the polymerization method, the solvent, and the polymerization initiator to be used. The polymerization temperature is preferably 25°C or higher, more preferably 50°C or higher, still more preferably 60°C or higher, particularly preferably 80°C or higher. The polymerization temperature is preferably 200°C or lower, more preferably 150°C or lower, still more preferably 120°C or lower, particularly preferably 110°C or lower.

The polymerization temperature preferably falls within the range from 25°C to 200°C, more preferably from 50°C to 150°C, still more preferably 60°C to 120°C, particularly preferably 80°C to 110°C.

The polymerization temperature does not need to be kept almost constant during the polymerization reaction. For example, the polymerization is started from room temperature, the temperature is raised to the set temperature over an appropriate heating time or at an appropriate temperature rising rate, and then, the set temperature is kept. Alternatively, the polymerization temperature may be varied (raised or lowered) over time during the polymerization reaction depending on the method of dropping the monomer components, initiators, etc. The polymerization temperature refers to the temperature of the reaction solution in the polymerization reaction. The polymerization temperature may be measured or controlled by any appropriate method or means. For example, the polymerization temperature may be measured using a commonly used device.

The pressure during polymerization in the production method is not limited, and may be any appropriate pressure. For example, the pressure may be normal pressure (atmospheric pressure), reduced pressure, or increased pressure.

The atmosphere in the reaction system may be an air atmosphere or may be an inert gas atmosphere. An inert gas atmosphere can be made in the reaction system by, for example, purging air in the reaction system with an inert gas such as nitrogen before starting the polymerization. As a result, the atmospheric gas (e.g., oxygen gas) in the reaction system is dissolved in the liquid phase and acts as a polymerization inhibitor.

In the production method, after the addition of all the raw materials to be used, ripening may be performed for the purpose of increasing the polymerization rate, for example.

In the production method, the polymerization time is preferably, but not limited to, 20 to 420 minutes.

### <Production of oligomer>

The compound having three or more carboxylic acids (salts) or an anhydride of the compound used in the step (C) is not limited, and may be an oligomer of one or more compounds selected from compounds having an unsaturated double bond and a carboxylic acid (salt) group.

The oligomer of one or more compounds selected from compounds having an unsaturated double bond and a carboxylic acid (salt) group used in the step (C) (hereinafter also referred to as an oligomer in the present disclosure) is not limited, and may be produced, for example, by the method below.

Examples of raw materials for the oligomer in the present disclosure include compounds having an unsaturated double bond and a carboxylic acid (salt) group, such as acrylic acid, maleic acid, fumaric acid, citraconic acid, itaconic acid, methylene glutaric acid, and methylene malonic acid. One or more compounds selected from the compounds are preferably used.

An optional monomer different from the compounds having an unsaturated double bond and a carboxylic acid (salt) group can be used as a raw material for the oligomer in the present disclosure.

Non-limiting examples of the different monomer include hydroxy group-containing monomers such as allyl alcohol, methallyl alcohol, isoprenol, hydroxyethyl acrylate, and hydroxyethyl methacrylate; monomers having a structure in which alkylene oxide is added to any of the hydroxy group-containing monomers, such as an adduct of ethylene oxide with methallyl alcohol and an adduct of ethylene oxide with isoprenol; amide group-containing monomers such as acrylamide and N-vinylpyrrolidone; sulfonic acid (salt) group-containing monomers such as sodium acrylamide propane sulfonate and sodium 2-hydroxy-3-aryloxypropane sulfonate; and hydrophobic group-containing monomers such as ethyl acrylate and isobornyl acrylate.

The amount of the compound having an unsaturated double bond and a carboxylic acid (salt) group based on 100% by mass of the monomers used for the oligomer in the present disclosure is not limited and may be any amount. The amount is preferably 30% by mass or more and 100% by mass or less, more preferably 50% by mass or more and 100% by mass or less, still more preferably 80% by mass or more and 100% by mass or less.

The oligomer in the present disclosure is preferably produced by polymerizing a compound having an unsaturated double bond and a carboxylic acid (salt) group and an optional different monomer in the presence of a polymerization initiator. Examples of the polymerization initiator include the polymerization initiators exemplified in the above-described section of <Polymerization initiator>.

The polymerization temperature conditions and pressure conditions for producing the oligomer in the present disclosure are the same as those described in the above-described section of <Polymerization conditions>.

The oligomer in the present disclosure may be produced by adding all raw materials to a reactor at once, or may be produced by adding all or part of the raw materials sequentially or continuously.

The oligomer in the present disclosure may be subjected to ripening for the purpose of increasing the polymerization rate.

In the production method, the polymerization time is not limited, and is preferably 20 to 420 minutes.

### (Uses of ester bond-containing polycarboxylic acid (salt))

The ester bond-containing polycarboxylic acid (salt) of the present disclosure can be suitably used in detergent builders, detergents, water treatment agents, dispersants, fiber treatment agents, scale inhibitors (scale suppressors), cement additives, metal ion-chelating agents, thickeners, and various binders, for example. Of these, it can be suitably used in detergent builders, detergents, water treatment agents, and dispersants.

The present disclosure also relates to a detergent builder, a detergent, a water treatment agent, or a dispersant, containing the ester bond-containing polycarboxylic acid (salt) of the present disclosure or an ester bond-containing polycarboxylic acid (salt) produced by the production method of the present disclosure as an essential ingredient.

### <Detergent builder, detergent composition>

The detergent builder of the present disclosure exhibits the effect of preventing soils from redeposition to clothes and the like during washing. The copolymer (ester bond-containing polycarboxylic acid (salt)) of the present disclosure strongly disperses clay soils due to the effect of charge repulsion of the carboxyl groups, and also disperses the removed clay soils to prevent the soils from redeposition to clothes. Thereby, the whiteness of white clothes can be further enhanced, and the added value of detergents can be greatly increased. The copolymer of the present disclosure also has a high ability to disperse zeolite used in powdered detergents, and is highly effective as a dispersant used in production of powdered detergents.

The detergent builder of the present disclosure has excellent compatibility with surfactants, and provides a highly concentrated liquid detergent. Thus, the detergent builder can be suitably used as a builder for liquid detergents. Owing to the excellent compatibility with surfactants of the detergent builder, a liquid detergent containing the detergent builder has good transparency, and a problem of separation of liquid detergents caused by turbidity can be prevented. Furthermore, owing to the excellent compatibility, a highly concentrated liquid detergent can be obtained, and the detergency of the liquid detergent can be improved. The detergent builder of the present disclosure exhibits an excellent thickening effect when incorporated into a liquid detergent. Such a liquid detergent is less likely to drip during use and thus can be easily handled.

The detergent builder of the present disclosure has excellent anti-redeposition ability, is also resistant to deterioration in performance when stored for a long period of time, and is less likely to cause precipitation of impurities when stored at low temperatures. Thus, the detergent builder has extremely high quality as an agent and excellent stability.

The detergency can be determined by the cleaning rate. The cleaning rate can be determined by the following method.

### (Evaluation method of cleaning rate)

Artificially soiled fabrics are used as samples. As artificially soiled fabrics, fabrics obtained from Scientific Services (STC GC C "soiled with clay", EMPA164 "soiled with grass", EMPA106 "soiled with carbon black/mineral oil)" are subjected to measurement of whiteness in advance with reflectance. The reflectance may be measured using, for example, a colorimeter ND-1001DP (Nippon Denshoku Industries Co., Ltd.).

Pure water is added to 1.47 g (0.74 g when using EMPA106 as a sample) of calcium chloride dihydrate to prepare 10 kg of hard water.

Pure water is added to 4.8 g of sodium polyoxyethylene lauryl ether sulfate (AES), 0.6 g of polyoxyethylene lauryl ether (AE), 0.6 g of sodium borate, 0.9 g of citric acid, and 2.4 g of propylene glycol to a total amount of 80 g. The pH of the resulting solution is adjusted to 8.2 with an aqueous sodium hydroxide solution, and pure water is added thereto to prepare a total of 100 g of an aqueous surfactant solution.

A Tergot-o-meter is set at 27°C, and a pot is charged with 1,000 mL of the hard water, 5 mL of an aqueous polymer solution (concentration 0.50% (concentration 0.60% when using EMPA106 as a sample)), 10 mL of the aqueous surfactant solution, and either a combination of 5.4 g of an artificially soiled fabric and 5.4 g of a white fabric or only 10.8 g of an artificially soiled fabric, followed by stirring at 100 rpm for 10 minutes.

Water is squeezed out of the artificially soiled fabric and white fabric by hand. A pot is charged with 1,000 mL of the hard water and the artificially soiled fabric and white cloth from which water is squeezed out, followed by stirring at 100 rpm for two minutes. The artificially soiled fabric and white cloth are taken out from the pot, and water is squeezed out by hand. The artificially soiled fabric is dried by ironing with a pressing cloth while the wrinkles are removed. The whiteness of the dried artificially soiled fabric is determined with reflectance using a colorimeter.

The cleaning rate (%) is determined using the following equation from the value measured. Detergency (5) = (Whiteness of artificially soiled fabric after washing - Whiteness of artificially soiled fabric before washing) / (Whiteness of original white fabric (EMPA221) of artificially soiled fabric - Whiteness of artificially soiled fabric before washing) × 100

Regarding the cleaning rate, the present disclosure also encompasses a detergent builder, detergent, water treatment agent, or dispersant, containing a composition containing an ester bond-containing polycarboxylic acid (salt), having a cleaning rate of 7.3% or higher when EMPA164 is used or a cleaning rate of 17.4% or higher when EMPA106 is used.

Among such compositions containing an ester bond-containing polycarboxylic acid (salt), that is, a detergent builder, a detergent, a water treatment agent, or a dispersant, preferred are those having the properties of two of these, in other words, those satisfying both of the cleaning rate when EMPA164 is used and the cleaning rate when EMPA106 is used.

The cleaning rate when EMPA164 is used is preferably 7.4% or higher.

The cleaning rate when EMPA106 is used is preferably 17.5% or higher, more preferably 17.6% or higher.

The artificially soiled fabrics EMPA164 and 106 used to measure the cleaning rate are reference test samples in which a certain amount of soil is attached to fabrics. EMPA164 is a white cotton fabric (EMPA221) soiled with grass and EMPA106 is a white cotton cloth (EMPA221) soiled with carbon black and mineral oil.

The detergent builder may contain compositional ingredients other than the ester bond-containing polycarboxylic acid (salt) at conventionally known blending ratios as long as they do not impair the effects of the present disclosure. The compositional ingredients may be known various components usable in conventionally known detergent builders.

The detergent may be a powdered detergent or a liquid detergent, and is preferably a liquid detergent because the ester bond-containing polycarboxylic acid (salt) is highly soluble with liquid detergents.

In addition to the ester bond-containing polycarboxylic acid (salt), the detergent may contain additives commonly used in detergents. Examples of the additives include surfactants, alkaline builders, chelate builders, anti-redeposition agents such as sodium carboxymethylcellulose, for prevention of redeposition of contaminants, soil inhibitors such as benzotriazole and ethylene-thiourea, soil release agents, color transfer inhibiting agents, softeners, alkaline substances for pH adjustment, fragrances, solubilizers, fluorescent agents, coloring agents, foaming agents, foam stabilizers, polishing agents, disinfectants, bleaches, bleaching aids, enzymes, dyes, and solvents. When the detergent is a powdered detergent, it preferably contains zeolite.

When used in the detergent, the ester bond-containing polycarboxylic acid (salt) of the present disclosure is preferably added in an amount from 0.1 to 20% by mass based on 100% by mass of the detergent. If the amount of the ester bond-containing polycarboxylic acid (salt) is less than 0.1% by mass, the detergency of the detergent may be insufficient. If the amount thereof is more than 20% by mass, the economical efficiency may decrease.

The detergent includes synthetic detergents for household use, detergents for the textile industry and other industries, hard surface cleaners, and detergents that are used only for specific purposes, with the function of one ingredient being enhanced, such as bleaching detergents.

The surfactant is at least one selected from anionic surfactants, nonionic surfactants, cationic surfactants, and amphoteric surfactants. One or more of these surfactants may be used.

When two or more types are used, the two or more types preferably include an anionic surfactant and a nonionic surfactant. In this case, the combined amount of anionic surfactant and nonionic surfactant is preferably 50% by mass or more based on 100% by mass or more of all the surfactants. The combined amount is more preferably 60% by mass or more, still more preferably 70% by mass or more, particularly preferably 80% by mass or more.

Suitable examples of the anionic surfactants include alkylbenzene sulfonates, alkyl ether sulfates, alkenyl ether sulfates, alkyl sulfates, alkenyl sulfates, α-olefin sulfonates, α-sulfo fatty acids or ester salts, alkanesulfonates, saturated fatty acid salts, unsaturated fatty acid salts, alkyl ether carboxylates, alkenyl ether carboxylates, amino acid-type surfactants, N-acyl amino acid-type surfactants, alkyl phosphate esters or salts thereof, and alkenyl phosphate esters or salts thereof. An alkyl group such as a methyl group in the alkyl group or alkenyl group in the anionic surfactant may have a branched structure.

Suitable examples of the nonionic surfactants include polyoxyalkylene alkyl ethers, polyoxyalkylene alkenyl ethers, polyoxyethylene alkylphenyl ethers, higher fatty acid alkanolamides or adducts of alkylene oxide therewith, sucrose fatty acid esters, alkyl glycosides, fatty acid glycerol monoesters, and alkylamine oxides. An alkyl group such as a methyl group in the alkyl group or alkenyl group in the nonionic surfactant may have a branched structure.

Suitable examples of the cationic surfactants include quaternary ammonium salts.

Suitable examples of the amphoteric surfactants include carboxyl type amphoteric surfactants and sulfobetaine type amphoteric surfactants.

An alkyl group such as a methyl group in the alkyl group or alkenyl group in the cationic surfactant may have a branched structure.

The ratio of the surfactants added is usually preferably 10 to 60% by mass relative to 100% by mass of the liquid detergent. The ratio is more preferably 15% by mass or more and 50% by mass or less, still more preferably 20% by mass or more and 45% by mass or less, particularly preferably 25% by mass or more and 40% by mass or less. If the ratio of the surfactants added is less than 10% by mass, sufficient detergency may not be exhibited. If the ratio is more than 60% by mass, the economical efficiency may decrease.

When two or more types of surfactants are used, the ratio of the sum of the two or more types of surfactants is preferably as described above.

The ratio of the builder for liquid detergents is preferably 0.1 to 20% by mass relative to 100% by mass of the liquid detergent. The ratio is more preferably 0.2% by mass or more and 15% by mass or less, still more preferably 0.3% by mass or more and 10% by mass or less, particularly preferably 0.4% by mass or more and 8% by mass or less, most preferably 0.5% by mass or more and 5% by mass or less. If the ratio of the builder for liquid detergents added is less than 0.1% by mass, sufficient detergent performance cannot be exhibited. If the ratio is more than 20% by mass, the economical efficiency may decrease.

The amount of water in the liquid detergent is preferably 0.1 to 75% by mass based on 100% by mass of the liquid detergent. The amount of water is more preferably 0.2% by mass or more and 70% by mass or less, still more preferably 0.5% by mass or more and 65% by mass or less, particularly preferably 0.7% by mass or more and 60% by mass or less, particularly preferably 1% by mass or more and 55% by mass or less, most preferably 1.5% by mass or more and 50% by mass or less.

The liquid detergent preferably has a kaolin turbidity of 200 mg/L or less, more preferably 150 mg/L or less, still more preferably 120 mg/L or less, particularly preferably 100 mg/L or less, most preferably 50 mg/L or less.

The change (difference) in kaolin turbidity between when the ester bond-containing polycarboxylic acid (salt) of the present disclosure is added to the liquid detergent and when it is not added is preferably 500 mg/L or less, more preferably 400 mg/L or less, still more preferably 300 mg/L or less, particularly preferably 200 mg/L or less, most preferably 100 mg/L or less. The kaolin turbidity can be measured by the following method.

### (Kaolin turbidity measurement method)

A uniformly stirred sample (liquid detergent) is placed in a 50-mm square cell with a thickness of 10 mm, and air bubbles are removed therefrom. The turbidity (kaolin turbidity: mg/L) is measured at 25°C using NDH2000 (trade name, turbidity meter) available from Nippon Denshoku Industries Co., Ltd.

Examples of suitable enzymes that can be incorporated into the detergent of the present disclosure include proteases, lipases, and cellulases. Preferred of these are proteases, alkaline lipases, and alkaline cellulases, which have high activity in alkaline cleaning solutions.

The amount of the enzyme is preferably 5% by mass or less based on 100% by mass of the detergent. When the amount of the enzyme is more than 5% by mass, the detergency does not enhance any more, which may result in a decrease in economical efficiency.

Suitable examples of the alkaline builders include silicates, carbonates, and sulfates.

Suitable examples of the chelate builders include diglycolic acid, oxycarboxylic acid, ethylenediaminetetraacetic acid (EDTA), diethylenetriaminepentaacetic acid (DTPA), citric acid, methylglycinediacetic acid (MGDA), and hydroxyiminodiacetic acid (HIDS). A water-soluble polycarboxylic acid polymer may also be used.

The detergent has excellent dispersibility, is also resistant to deterioration in performance when stored for a long period of time, and is less likely to cause precipitation of impurities when stored at low temperatures. Thus, the detergent has extremely high quality as an agent and excellent stability.

### <Water treatment agent>

The compound of the present disclosure (the ester bond-containing polycarboxylic acid (salt) of the present disclosure) may be used in water treatment agents. The water treatment agent may optionally contain other compounding agents such as polymeric phosphoric acid salts, phosphonic acid salts, anticorrosive agents, slime controlling agents, and chelating agents.

The water treatment agent is useful to prevent the scales in a cool water circulation system, a boiler water circulation system, a seawater desalting unit, a pulp digester, a black liquor evaporator, etc. The water treatment agent may optionally contain a suitable water-soluble polymer within a range that does not affect performance or benefits.

### <Fiber treatment agent>

The compound of the present disclosure may be used in fiber treatment agents. The fiber treatment agent contains at least one selected from the group consisting of dyeing agents, peroxides, and surfactants and the polymers (or polymer composition) of the present disclosure.

The fiber treatment agent contains the compound of the present disclosure in an amount preferably from 1 to 100% by weight, more preferably from 5 to 100% by weight, based on the entire fiber treatment agent. The fiber treatment agent may further contain any appropriate water-soluble compound within a range that does not affect the performance and benefits.

The following describes a blending example of fiber treatment agents that is more similar to the embodiment. The fiber treatment agent can be used in scouring, dyeing, bleaching, or soaping in fiber treatment. The dyeing agents, peroxides, and surfactants include those commonly used in fiber treatment agents.

The blending ratio between the ester bond-containing polycarboxylic acid (salt) of the present disclosure and at least one selected from the group consisting of dyeing agents, peroxides, and surfactants is as follows. For example, in order to improve the degree of whiteness, color evenness, and degree of dyed colorfastness of fibers, the fiber treatment agent is preferably a composition containing 0.1 to 100 parts by weight of at least one selected from the group consisting of dyeing agents, peroxides, and surfactants per 1 part by weight of the compound of the present disclosure in terms of the pure content of fiber treatment agent.

The fiber treatment agent can be used for any appropriate fiber. Examples thereof include cellulose fibers such as cotton and hemp, chemical fibers such as nylon and polyester, animal fibers such as wool and silk, semisynthetic fibers such as rayon, woven fabrics thereof, and blended fabrics thereof.

In the case where the fiber treatment agent is applied to the scouring step, the compound of the present disclosure is preferably mixed with alkaline agents and surfactants. In the case where the fiber treatment agent is applied to the bleaching step, the compound of the present disclosure is preferably mixed with peroxides and silicic chemicals, which are used as inhibitors of alkaline bleaching agents from decomposition, such as sodium silicate.

### <Inorganic pigment-dispersing agent>

The compound of the present disclosure can be used in inorganic pigment-dispersing agents. The inorganic pigment-dispersing agent may optionally contain, as other compounding agents, condensed phosphoric acid and salts thereof, phosphonic acid and salts thereof, or polyvinyl alcohol.

The inorganic pigment-dispersing agent preferably contains the compound of the present disclosure in an amount from 5 to 100% by weight based on the entire inorganic pigment-dispersing agent. The inorganic pigment-dispersing agent may contain any suitable water-soluble compound within a range that does not affect performance or benefits.

The inorganic pigment-dispersing agent exhibits good performance as a dispersant for inorganic pigments such as a heavy calcium carbonate, light calcium carbonate or clay used for paper-coating. For example, a small amount of the inorganic pigment-dispersing agent is added to disperse inorganic pigments in water. Thereby, a high-concentrated inorganic pigment slurry, like a high-concentrated calcium carbonate slurry, can be produced which has a low viscosity and high fluidity, with these properties being highly stable over time.

When the inorganic pigment-dispersing agent is used as a dispersant for inorganic pigments, a preferred amount of the inorganic pigment-dispersing agent used is from 0.05 to 2.0 parts by weight per 100 parts by weight of the inorganic pigment. When the amount of the inorganic pigment-dispersing agent used falls within the above range, a sufficient dispersion effect can be obtained, and an effect commensurate with the amount added can be obtained, which may be economically advantageous.

### EXAMPLES

### <Biodegradability test>

The obtained ester bond-containing polycarboxylic acids (salts) were subjected to OECD 301F biodegradability test.

### (1) Preparation of medium

Medium stock solutions A to D were prepared by the following technique.

Solution A: 0.850 g of potassium dihydrogen phosphate (KH₂PO₄), 2.175 g of dipotassium hydrogen phosphate (K₂HPO₄), 6.7217 g of disodium hydrogen phosphate dodecahydrate (Na₂HPO₄·12H₂O), and 0.050 g of ammonium chloride (NH₄Cl) were weighed into a 50-ml sampling bottle and dissolved in an appropriate amount of water; the solution was transferred to a 100-ml volumetric flask; and water was added up to the marked line.

Solution B: 3.640 g of calcium chloride dihydrate (CaCl₂·2H₂O) was dissolved in an appropriate amount of water; the solution was transferred to a 100-ml volumetric flask; and water was added up to the marked line.

Solution C: 2.250 g of magnesium sulfate heptahydrate (MgSO₄·7H₂O) was dissolved in an appropriate amount of water; the solution was transferred to a 100-ml volumetric flask; and water was added up to the marked line.

Solution D: 0.025 g of iron (III) chloride hexahydrate (FeCl₃·6H₂O) was dissolved in an appropriate amount of water; the solution was transferred to a 100-ml volumetric flask; and water was added up to the marked line.

The temperatures of the medium stock solutions A to D were adjusted to 25°C. The stock solution A in an amount of 10 ml was added to a 1-L volumetric flask using a volumetric pipette, and diluted with about 800 ml of water. Thereafter, 1 ml each of the stock solutions B, C, and D was added using a volumetric pipette and the mixture was diluted to the marked line with water having a temperature of 25°C. The required number of the thus-prepared media for the test were prepared. Each of the prepared media was transferred to a 5-L beaker, mixed, and bubbled for at least one hour under stirring.

### (2) Preparation of sludge solution

The sludge used for the biodegradability test was obtained from the Minami Suita wastewater treatment plant. First, the concentration of the sludge obtained was measured by the following technique. Bubbling of the obtained sludge was performed under stirring and 5 ml of the sludge taken with a volumetric pipette was subjected to suction filtration using filter paper. Five sheets of filter paper on which the sludge was collected in this manner were prepared, and dried in a drier at 105°C for one hour. The average weight loss of the five sheets was calculated to determine the concentration of the sludge. The sludge was diluted with the medium prepared above to prepare a 1,000 ppm sludge solution.

### (3) Preparation of aqueous polymer solution

The polymers obtained in the examples were diluted with pure water to obtain 2% by mass aqueous polymer solutions. Separately, as a standard substance, sodium benzoate was diluted with pure water to obtain a 2% by mass aqueous sodium benzoate solution.

### BOD test

The BOD was measured using a pressure sensor BOD meter. In an incubation bottle, 144.75 g of the medium prepared above was weighted out, and 0.75 g of the 2% aqueous polymer solution was added thereto. Separately, for blank measurement, 0.75 g of pure water was added, and for standard substance measurement, 0.75 g of the 2% aqueous sodium benzoate solution was added. Thereafter, the pH of the solution in the incubation bottle was measured, and adjusted with a 0.1 M aqueous hydrochloric acid solution to fall within 7.4 ± 0.2. To the solution was added 4.5 ml of the 1,000 ppm sludge solution to prepare a test solution. A stir bar was placed in the incubation bottle. A CO₂ absorbent holder containing 1.8 g of a CO₂ absorbent (YABASHI LIME) was inserted into the bottle and a BOD sensor was attached to the bottle. The incubation bottle equipped with the BOD sensor was placed in a constant temperature bath at 24°C and the contents were stirred. Thereby, the BOD value was calculated from the pressure sensor.

### Calculation of degradation rate

The theoretical oxygen demand (ppm) of the polymers was calculated, the difference between the BOD value obtained from the blank measurement and the BOD value obtained from the measurement using the ester bond-containing polycarboxylic acids (salts) was determined, and the degradation rate was calculated from the difference. The degradation rate 28 days after the start of the test was defined as the biodegradation rate. Degradation rate (%) = (Biochemical oxygen consumption derived from polymer) / (Theoretical oxygen demand of polymer) × 100

### <Alkaline degradation change rate>

An ester group-containing polymer (ester bond-containing polycarboxylic acid (salt)) having a pH of 13 or higher was prepared, and 48% NaOH was added thereto. The contents were heated at 90°C for five hours to perform alkaline degradation. The weight average molecular weights of the polymer before and after alkaline degradation were measured under the following weight average molecular weight measurement conditions, and based on the difference therebetween, the alkaline degradation change rate was determined. Alkaline degradation change rate (%) = (Weight average molecular weight before alkaline degradation - Weight average molecular weight after alkaline degradation) / (Weight average molecular weight before alkaline degradation) × 100

### <Weight average molecular weight measurement conditions>

Apparatus: HLC-8320GPC available from Tosoh Corporation
Detector: RI
Column: Tsk-gelG-3000SWXL × 2
Column temperature: 40°C
Flow rate: 0.5 mL/min.
Calibration curve: polyacrylic acid standard available from American Polymer Standards
Eluent: 80 mM phosphate buffer

### <Ca chelating ability measurement conditions>

As calcium ion standard solutions for calibration curves, 0.01 mol/L, 0.001 mol/L, and 0.0001 mol/L aqueous solutions each in an amount of 50 g were prepared using calcium chloride dihydrate. The pH of each aqueous solution was adjusted to fall within the range from 9.5 to 10.5 with a 1.0% aqueous solution of NaOH. Then, 1 mL of a 4 mol/L aqueous potassium chloride solution (hereinafter, abbreviated as 4M-KCl aqueous solution) was added thereto. The contents were sufficiently stirred with a magnetic stirrer to prepare a sample solution for a calibration curve. Separately, as a test calcium ion standard solution, a necessary amount (50 g per sample) of a 0.001 mol/L aqueous solution was prepared also using calcium chloride dihydrate.

Then, 10 mg (in terms of solids) of a test sample (ester bond-containing polycarboxylic acid (salt)) was weighed in a 100-mL beaker, and 50 g of the test calcium ion standard solution was added thereto. The contents were sufficiently stirred with a magnetic stirrer. As in the case of the sample for a calibration curve, the pH of the solution was adjusted to fall within the range from 9.5 to 10.5 with a 1.0% aqueous sodium hydroxide solution, and 1 mL of a 4M-KCl aqueous solution was added thereto to prepare a test sample solution.

The thus prepared sample solution for a calibration curve and test sample solution were subjected to measurement using a titrator COM-1700 available from HIRANUMA Co., Ltd. and Orion 9720BNWP Sure-Flow calcium combination electrode available from Thermo Fisher Scientific K.K. A calibration curve of Ca ion molar concentration was created from the measured values of the sample solutions for a calibration curve, and the Ca ion molar concentration of the sample solutions was calculated using the calibration curve from the measured values of the test sample solutions. The Ca chelating ability was calculated using the following equation. Ca chelating ability of sample solution = (0.001 - Ca ion molar concentration of sample (mol/L) ) / 0.01 × 100 × 50/1000 × 1000

### <Test of ability to disperse clay>

(1) Pure water was added to 67.56 g of glycine, 52.60 g of sodium chloride, and 5.00 g of 48% sodium hydroxide to prepare 600 g of a glycine buffer.
(2) Pure water was added to 60 g of a glycine buffer, 0.123 g of calcium chloride dihydrate, and 0.056 g of magnesium chloride hydrate to prepare 1,000 g of a buffer solution for dispersion (100 ppm in a test solution (Ca/Mg = 3/1 (mol)).
(3) A 0.10% aqueous solution of ester bond-containing polycarboxylic acid was prepared.
(4) A test tube was charged with 0.3 g of JIS Class 11 clay, 27.0 g of the glycine buffer prepared in (2), and 3.0 g of the 0.10% aqueous solution of ester bond-containing polycarboxylic acid prepared in (3), and was capped.
(5) The clay accumulated at the bottom was loosened, and the test tube was inverted 60 times.
(6) The cap of the test tube was removed, and the upper portion of the test tube was covered with plastic wrap, and was allowed to stand in a stable place for 20 hours.
(7) A 5 cc of the supernatant was collected from 5 cm from the top of the test tube, and subjected to measurement of the ABS (absorbance) at UV 380 nm to obtain a value of the test of ability to disperse clay.

The higher the value of the test of ability to disperse clay, the higher the ability to disperse clay and the higher the detergency against clay soils.

### <Test of ability to disperse carbon black>

(1) A 5.0% aqueous solution of ester bond-containing polycarboxylic acid was prepared.
(2) A test tube was charged with 0.1 g of Mitsubishi Chemical Carbon Black #10, 9 g of ion-exchanged water, and 1.0 g of the 5.0% aqueous solution of ester bond-containing polycarboxylic acid prepared in (1), and was capped.
(3) The carbon black accumulated at the bottom was loosened, and the test tube was inverted 60 times.
(4) The cap of the test tube was removed, and the upper portion of the test tube was covered with plastic wrap, and allowed to stand in a stable place for four hours.
(5) The dispersion liquid after standing was observed, and the dispersion state was evaluated based on the following criteria.

### (Criteria)

Well dispersed: Excellent
Dispersed to some extent: Good
Hardly dispersed: Poor

The higher the ability to disperse carbon black, the higher the detergency against complex soils containing grease soil.

### <NMR measurement conditions>

A ¹H-NMR analysis was performed under the following conditions.
Name of apparatus: Varian VNMRS600
Measurement conditions:
   Nuclide: ¹H
   Resonance frequency: 600 MHz
   Signal acquisition time: 3.4 seconds
   Delay time: 5 seconds
   Number of scans: 128 times
   Solvent: D₂O
   Sample concentration: 10%
   A measurement sample was previously dried under reduced pressure to dryness, and then dissolved in a measurement solvent before measurement.

### <Example 1>

### (Esterification step)

A 2-L SUS 316L reaction vessel equipped with a stirrer and a reflux condenser was charged with 90 parts of ethylene glycol and 213.3 parts of maleic anhydride. The temperature was raised to 120°C with stirring, and the contents were heated at 120°C for 60 minutes with stirring.

### (Polymerization step)

After the esterification step, 150 parts of pure water was added. With stirring under reflux at a boiling point (approximately 105°C to 101°C), 90 parts of a 15% aqueous sodium persulfate solution and 150 parts of a 35% aqueous hydrogen peroxide solution were continuously added dropwise over 60 minutes at constant rates from different inlet lines. Then, ripening was performed for 60 minutes under reflux at the boiling point. After the ripening, the temperature was lowered to obtain an ester bond-containing polycarboxylic acid (1) with a solid content of 44%.

The molecular weight of the obtained ester group-containing polycarboxylic acid (1) was measured by aqueous GPC. Also, the Ca chelating ability, biodegradability (according to OECD 301F), and change in molecular weight after alkaline degradation were measured. The results are shown in Table 1.

### <Example 2>

### (Esterification step)

A 2-L SUS 316L reaction vessel equipped with a stirrer and a reflux condenser was charged with 90 parts of ethylene glycol and 284.4 parts of maleic anhydride. The temperature was raised to 120°C with stirring, and the contents were heated at 120°C for 60 minutes with stirring.

### (Polymerization step)

After the esterification step, 120 parts of pure water was added. With stirring under reflux at a boiling point (approximately 105°C to 101°C), 60 parts of a 15% aqueous sodium persulfate solution, 150 parts of a 35% aqueous hydrogen peroxide solution, and 42 parts of a 80% aqueous acrylic acid solution were continuously added dropwise over 60 minutes at constant rates from different inlet lines. Then, ripening was performed for 60 minutes under reflux at the boiling point. After the ripening, the temperature was lowered to obtain an ester bond-containing polycarboxylic acid (2) with a solid content of 55%.

The physical properties thereof were measured as in Example 1. The results are shown in Table 1.

### <Example 3>

### (Esterification step)

A 2-L SUS 316L reaction vessel equipped with a stirrer and a reflux condenser was charged with 90 parts of ethylene glycol and 284.4 parts of maleic anhydride. The temperature was raised to 120°C with stirring, and the contents were heated at 120°C for 60 minutes with stirring.

### (Polymerization step)

After the esterification step, with stirring under reflux at a boiling point (approximately 105°C to 101°C), 60 parts of a 15% aqueous sodium persulfate solution, 210 parts of a 35% aqueous hydrogen peroxide solution, and 42 parts of a 80% aqueous acrylic acid solution were continuously added dropwise over 60 minutes at constant rates from different inlet lines. Then, ripening was performed for 60 minutes under reflux at the boiling point. After the ripening, the temperature was lowered and 300 parts of pure water was added to obtain an ester bond-containing polycarboxylic acid (3) with a solid content of 42%.

The physical properties thereof were measured as in Example 1. The results are shown in Table 1.

### <Example 4>

### (Esterification step)

A 2-L SUS 316L reaction vessel equipped with a stirrer and a reflux condenser was charged with 90 parts of ethylene glycol and 284.4 parts of maleic anhydride. The temperature was raised to 120°C with stirring, and the contents were heated at 120°C for 60 minutes with stirring.

### (Polymerization step)

After the esterification step, with stirring under reflux at a boiling point (approximately 105°C to 101°C), 60 parts of a 15% aqueous sodium persulfate solution, 210 parts of a 35% aqueous hydrogen peroxide solution, and 84 parts of a 80% aqueous acrylic acid solution were continuously added dropwise over 60 minutes at constant rates from different inlet lines. Then, ripening was performed for 60 minutes under reflux at the boiling point. After the ripening, the temperature was lowered and 150 parts of pure water was added to obtain an ester bond-containing polycarboxylic acid (4) with a solid content of 50%. A proton NMR chart of the obtained ester bond-containing polycarboxylic acid (4) is shown in FIG. 1.

The physical properties thereof were measured as in Example 1. The results are shown in Table 1.

### <Example 5>

### (Esterification step)

A 2-L SUS 316L reaction vessel equipped with a stirrer and a reflux condenser was charged with 90 parts of glycerol and 219 parts of itaconic anhydride. The temperature was raised to 70°C with stirring, and the contents were heated at 70°C for 60 minutes with stirring.

### (Polymerization step)

After the esterification step, 300 parts of pure water was added. With stirring at 95°C, 39 parts of a 10% aqueous sodium persulfate solution and 97.5 parts of a 10% aqueous sodium bisulfite solution were continuously added dropwise over 60 minutes at constant rates from different inlet lines. Then, ripening was performed for 60 minutes under reflux at the boiling point. After the ripening, the temperature was lowered to obtain an ester bond-containing polycarboxylic acid (5) with a solid content of 42%.

The physical properties thereof were measured as in Example 1. The results are shown in Table 1.

### <Example 6>

### (Esterification step)

A 2-L SUS 316L reaction vessel equipped with a stirrer and a reflux condenser was charged with 90 parts of ethylene glycol and 150 parts of itaconic anhydride. The temperature was raised to 120°C with stirring, and the contents were heated at 120°C for 60 minutes with stirring.

### (Polymerization step)

After the esterification step, 600 parts of pure water was added. With stirring at 95°C, 60 parts of a 15% aqueous sodium persulfate solution and 210 parts of a 30% aqueous sodium bisulfite solution were continuously added dropwise over 60 minutes at constant rates from different inlet lines. Then, ripening was performed for 60 minutes under reflux at the boiling point. After the ripening, the temperature was lowered and 300 g of pure water was added to obtain an ester bond-containing polycarboxylic acid (6) with a solid content of 27%.

The physical properties thereof were measured as in Example 1. The results are shown in Table 1.

**[Table 1]**

| | Ester bond-containing polycarboxylic acid | Molecular weight (Mw) before alkaline degradation | Molecular weight (Mw) after alkaline degradation | Alkaline degradation change rate (%) | Biodegradability (%) | Ca chelating ability (mg CaCO₃/g) | Test of ability to disperse clay |
|---|---|---|---|---|---|---|---|
| Example 1 | (1) | 2500 | 2000 | 20 | 80 | 80 | 0.12 |
| Example 2 | (2) | 1800 | 1400 | 22 | 80 | 110 | 0.12 |
| Example 3 | (3) | 2200 | 1500 | 32 | 70 | 120 | 0.42 |
| Example 4 | (4) | 7200 | 3200 | 56 | 60 | 160 | 0.57 |
| Example 5 | (5) | 6000 | 3300 | 45 | 70 | 150 | 0.58 |
| Example 6 | (6) | 5400 | 2500 | 54 | 70 | 80 | 0.62 |

(Molecular weight before degradation - Molecular weight after alkaline degradation) /Molecular weight before degradation × 100 Alkaline degradation was performed by adjusting the pH of the ester group-containing polycarboxylic acids of the examples to 13 by adding NaOH, and heat-treating them at 100°C for three hours.

Ca chelating ability: The amount of Ca chelated by 1 g of polymer in terms of solid (calculated in terms of the milligrams of CaCO₃)

Test of ability to disperse clay: An ability to disperse clay soils was measured. The higher the value, the higher the ability to disperse. A detergent containing such a polymer has an improved detergency against clay soils.

### <Comparison Example>

As a comparative example, the physical properties of a sodium polyacrylate (comparative polycarboxylic acid (C-1)) with a molecular weight of 2500 were measured as in Example 1. The results are shown in Table 2.

**[Table 2]**

| | Comparative polycarboxylic acid | Molecular weight (Mw) before alkaline degradation | Molecular weight (Mw) after alkaline degradation | Alkaline degradation change rate (%) | Biodegradability (%) | Ca chelating ability (mg CaCO₃/g) | Test of ability to disperse clay | Ability to disperse carbon black |
|---|---|---|---|---|---|---|---|---|
| Comparative Example 1 | (C-1) | 2500 | 2500 | 0 | 2 | 200 | 0.69 | Poor |

### <Example 7>

### (Esterification step)

A 1-L SUS 316L reaction vessel equipped with a stirrer and a reflux condenser was charged with 35 parts of ethylene glycol and 94.8 parts of maleic anhydride. The temperature was raised to 120°C with stirring, and the contents were heated at 120°C for 60 minutes with stirring.

### (Polymerization step)

After the esterification step, 2 parts of a 1.8% aqueous solution of Mohr's salt was added. With stirring under reflux at a boiling point (approximately 120°C to 135°C), 12 parts of diethanolamine, 70 parts of a 35% aqueous hydrogen peroxide solution, and 28 parts of a 80% aqueous acrylic acid solution were continuously added dropwise over 120 minutes at constant rates from different inlet lines. Then, ripening was performed for 30 minutes under reflux at the boiling point. After the ripening, the temperature was lowered to obtain an ester bond-containing polycarboxylic acid (7) with a solid content of 44%.

The molecular weight of the obtained ester group-containing polycarboxylic acid (7) was measured by aqueous GPC. Also, the Ca chelating ability, biodegradability (according to OECD 301F), and change in molecular weight after alkaline degradation were measured. The results are shown in Table 3.

The Ca chelating ability and the biodegradability (according to OECD 301F) of the ester group-containing polycarboxylic acid (7) were evaluated to be 160 mg CaCO₃/g and 55%, respectively.

### <Example 8>

### (Esterification step)

A 1-L SUS 316L reaction vessel equipped with a stirrer and a reflux condenser was charged with 21.7 parts of ethylene glycol, 66.4 parts of maleic anhydride, and 10.5 parts of SOFTANOL 60 (an adduct of 6 mol EO with secondary alcohol, available from Nippon Shokubai Co., Ltd.). With stirring, the temperature was raised to 120°C, and the contents were heated at 120°C for 60 minutes with stirring.

### (Polymerization step)

After the esterification step, 1.4 parts of a 1.8% aqueous solution of Mohr's salt was added. With stirring under reflux at a boiling point (approximately 120°C to 135°C), 16.8 parts of diethanolamine, 56 parts of a 35% aqueous hydrogen peroxide solution, and 19.6 parts of a 80% aqueous acrylic acid solution were continuously added dropwise over 120 minutes at constant rates from different inlet lines. Then, ripening was performed for 30 minutes under reflux at the boiling point. After the ripening, the temperature was lowered and 300 parts of pure water was added to obtain an ester bond-containing polycarboxylic acid (8) with a solid content of 42%.

The physical properties thereof were measured as in Example 1. The results are shown in Table 3.

### <Example 9>

### (Esterification step)

A 2-L SUS 316L reaction vessel equipped with a stirrer and a Dean-Stark tube for dehydration was charged with 34.3 parts of ethylene glycol, 164 parts of 1,2,3,4-butanetetracarboxylic dianhydride, 2.26 parts of a 70% aqueous p-toluenesulfonic acid solution, and 300 parts of water. The temperature was raised with stirring to promote dehydration. After the internal temperature reached 150°C, heating and stirring were continued for 60 minutes.

### (Neutralization step)

After the esterification step, the temperature was lowered to 60°C, and the entire amount of a solution of 87.5 parts of sodium carbonate in 374 parts of pure water was added. Then, the contents were stirred for 30 minutes, followed by nitrogen bubbling at a flow rate of 100 mL/min. Thus, an ester bond-containing polycarboxylic acid (9) with a solid content of 40% was obtained.

The molecular weight of the obtained ester group-containing polycarboxylic acid (No.) was measured by aqueous GPC. Also, the Ca chelating ability, biodegradability (according to OECD 301F), and change in molecular weight after alkaline degradation were measured. The results are shown in Table 3.

### <Example 10>

### (Polymerization step)

A 2-L SUS 316L reaction vessel equipped with a stirrer and a reflux condenser was charged with 125 parts of water, 155 parts of maleic acid, and 70.2 parts of a 0.1% aqueous solution of Mohr's salt. With stirring, the temperature was raised to 100°C. While maintaining the temperature, a mixture of 129 parts of a 35% hydrogen peroxide solution and 20.6 parts of water was added dropwise to the vessel at a constant rate over four hours. After the dropwise addition, the contents were ripened for 30 minutes and then cooled to room temperature.

### (Esterification step)

A 2-L SUS 316L reaction vessel equipped with a stirrer and a Dean-Stark tube for dehydration was charged with the entire amount of the reaction solution and 16.6 parts of ethylene glycol. With stirring, the temperature was raised to promote dehydration. After the internal temperature reached 150°C, heating and stirring were continued for 60 minutes.

### (Neutralization step)

After the esterification step, the temperature was lowered to 60°C, and the entire amount of a solution of 70.6 parts of sodium carbonate in 387 parts of pure water was added. Then, the contents were stirred for 30 minutes, followed by nitrogen bubbling at a flow rate of 100 mL/min. Thus, an ester bond-containing polycarboxylic acid (10) with a solid content of 40% was obtained.

The molecular weight of the obtained ester group-containing polycarboxylic acid (No.) was measured by aqueous GPC. Also, the Ca chelating ability, biodegradability (according to OECD 301F), and change in molecular weight after alkaline degradation were measured. The results are shown in Table 3.

The biodegradability (according to OECD 301F) of the ester group-containing polycarboxylic acid (10) was evaluated to be 22%.

### <Example 11>

### (Polymerization step)

A 2-L SUS 316L reaction vessel equipped with a stirrer and a reflux condenser was charged with 102 parts of water, 131 parts of itaconic acid, and 70.1 parts of a 0.1% aqueous solution of Mohr's salt. With stirring, the temperature was raised to 100°C. While maintaining the temperature, 197 parts of a 35% hydrogen peroxide solution was added dropwise to the vessel at a constant rate over four hours. After the dropwise addition, the contents were ripened for 30 minutes and then cooled to room temperature.

### (Esterification step)

A 2-L SUS 316L reaction vessel equipped with a stirrer and a Dean-Stark tube for dehydration was charged with the entire amount of the reaction solution, 21.3 parts of ethylene glycol, and 2.60 parts of a 70% aqueous p-toluenesulfonic acid solution. With stirring, the temperature was raised to promote dehydration. After the internal temperature reached 150°C, heating and stirring were continued for 60 minutes.

### (Neutralization step)

After the esterification step, the temperature was lowered to 60°C, and the entire amount of a solution of 53.3 parts of sodium carbonate in 379 parts of pure water was added. Then, the contents were stirred for 30 minutes, followed by nitrogen bubbling at a flow rate of 100 mL/min. Thus, an ester bond-containing polycarboxylic acid (11) with a solid content of 40% was obtained.

The molecular weight of the obtained ester group-containing polycarboxylic acid (No.) was measured by aqueous GPC. Also, the Ca chelating ability, biodegradability (according to OECD 301F), and change in molecular weight after alkaline degradation were measured. The results are shown in Table 3.

### <Example 12>

### (Esterification step)

A 1-L SUS 316L reaction vessel equipped with a stirrer and a reflux condenser was charged with 30.0 parts of ethylene glycol, 94.8 parts of maleic anhydride, and 20.0 parts of citric acid. The temperature was raised to 120°C with stirring, and the contents were heated at 120°C for 60 minutes with stirring.

### (Polymerization step)

After the esterification step, 2.0 parts of a 1.8% aqueous solution of Mohr's salt was added. With stirring under reflux at a boiling point (approximately 110°C to 135°C), 25.0 parts of diethanolamine, 90 parts of a 35% aqueous hydrogen peroxide solution, and 35 parts of a 80% aqueous acrylic acid solution were continuously added dropwise over 120 minutes at constant rates from different inlet lines. Then, ripening was performed for 30 minutes under reflux at the boiling point. After the ripening, the temperature was lowered and 300 parts of pure water was added to obtain an ester bond-containing polycarboxylic acid (12) with a solid content of 45%. The physical properties thereof were measured as in Example 1. The results are shown in Table 3.

**[Table 3]**

| | Ester bond-containing polycarboxylic acid | Molecular weight (Mw) before alkaline degradation | Molecular weight (Mw) after alkaline degradation | Alkaline degradation change rate (%) | Ability to disperse carbon black | Biodegradability (%) | Ca chelating ability (mg CaCO₃/g) | Test of ability to disperse clay |
|---|---|---|---|---|---|---|---|---|
| Example 7 | (7) | 2000 | 700 | 65 | Excellent | 55 | 160 | 0.65 |
| Example 8 | (8) | 1000 | 700 | 30 | Excellent | 58 | 130 | 0.61 |
| Example 9 | (9) | 2300 | 250 | 89 | Good | 23 | 100 | 0.58 |
| Example 10 | (10) | 1600 | 400 | 75 | Good | 22 | 105 | 0.57 |
| Example 11 | (11) | 7200 | 500 | 93 | Excellent | 25 | 150 | 0.55 |
| Example 12 | (12) | 1200 | 600 | 50 | Excellent | 61 | 180 | 0.62 |

The results in Tables 1 and 2 demonstrate that the ester bond-containing polycarboxylic acids of the present disclosure have high alkaline degradation rates and high biodegradability.

The results in Table 3 demonstrate that the ester bond-containing polycarboxylic acids of the present disclosure have high ability to disperse carbon black in addition to high alkaline degradation rates.

## Claims

1. An ester bond-containing polycarboxylic acid or a salt thereof, comprising:
an ester group-derived structural unit in a main chain; and
a carboxylic acid or a salt thereof in a side chain,
the carboxylic acid or the salt thereof being attached to a β position or a γ position of a carbonyl carbon of the ester group.

2. The ester bond-containing polycarboxylic acid or the salt thereof according to claim 1, which has an alkaline degradation change rate of 10% or higher.

3. The ester bond-containing polycarboxylic acid or the salt thereof according to claim 1 or 2, which has a biodegradability of 20% or higher.

4. A detergent composition comprising
the ester bond-containing polycarboxylic acid or the salt thereof according to any one of claims 1 to 3.

5. A method for producing an ester bond-containing polycarboxylic acid or a salt thereof, the method comprising:
reacting a compound having an unsaturated double bond and an acid anhydride group with a compound having two or more hydroxy groups to obtain a product; and
reacting double bonds of the product.

6. A method for producing an ester bond-containing polycarboxylic acid or a salt thereof, the method comprising
reacting a compound having three or more selected from the group consisting of a carboxylic acid and salts thereof or an anhydride of the compound with a compound having two or more hydroxy groups.
